(19) **Europäisches Patentamt**

**European Patent Office**

**Office européen des brevets**

(11) **EP 1 213 569 B1**

(12) **EUROPÄISCHE PATENTSCHRIFT**

| | |
|---|---|
| (45) Veröffentlichungstag und Bekanntmachung des Hinweises auf die Patenterteilung: **17.05.2006 Patentblatt 2006/20** | (51) Int Cl.: *G01J 3/51* (2006.01) *G01J 3/46* (2006.01) |

(21) Anmeldenummer: **01105313.9**

(22) Anmeldetag: **07.03.2001**

(54) **Vorrichtung zur bildelementweisen Ausmessung eines flächigen Messobjekts**

Device for the measurement by pixel of a plane measurement object

Dispositif pour la mesure pixel par pixel d'un objet de mesure plat

(84) Benannte Vertragsstaaten:
**CH DE FR GB IT LI**

(30) Priorität: **08.12.2000 EP 00126493**

(43) Veröffentlichungstag der Anmeldung:
**12.06.2002 Patentblatt 2002/24**

(73) Patentinhaber: **Gretag-Macbeth AG**
**8105 Regensdorf (CH)**

(72) Erfinder: **Ott, Hans**
**8105 Regensdorf (CH)**

(74) Vertreter: **Schwabe - Sandmair - Marx**
**Stuntzstrasse 16**
**81677 München (DE)**

(56) Entgegenhaltungen:
**EP-A- 0 335 559        US-A- 5 128 710**
**US-A- 5 724 259        US-A- 5 850 472**

- TOBIN K W ET AL: "Accommodating multiple illumination sources in an imaging colorimetry environment" PROC. SPIE - INT. SOC. OPT. ENG. (USA), PROCEEDINGS OF THE SPIE - THE INTERNATIONAL SOCIETY FOR OPTICAL ENGINEERING, 2000, SPIE-INT. SOC. OPT. ENG, USA, Bd. 3966, 26. Januar 2000 (2000-01-26), Seiten 194-205, XP002269293 ISSN: 0277-786X
- CHOATE A G: "OPTICAL AND DIGITAL PROCESSING TECHNIQUES IN A MACHINE VISION METROLOGY SYSTEM" OPTICAL ENGINEERING, SOC. OF PHOTO-OPTICAL INSTRUMENTATION ENGINEERS. BELLINGHAM, US, Bd. 28, Nr. 12, 1. Dezember 1989 (1989-12-01), Seiten 1311-1316, XP000085690 ISSN: 0091-3286
- BALDWIN G: "TELECENTRIC LENS FOR PRECISION MACHINE VISION" PROCEEDINGS OF THE SPIE, SPIE, BELLINGHAM, VA, US, Bd. 2730, 18. August 1995 (1995-08-18), Seiten 440-443, XP001098942 ISSN: 0277-786X

**Beschreibung**

Die Erfindung betrifft eine Vorrichtung zur bildelementweisen fotoelektrischen Ausmessung eines flächigen Messobjekts gemäss dem Oberbegriff des unabhängigen Anspruchs.

Zur punktweisen fotoelektrischen Abtastung von flächigen Messobjekten werden vor allem in der grafischen Industrie sogenannte Scanner eingesetzt. Diese besitzen einen relativ zum Messobjekt in ein oder zwei Dimensionen beweglichen Messkopf, der die spektrale Remission jeweils eines Bildpunkts des Messobjekts mittels einer 0°/45°-Messgeometrie erfasst und in entsprechende elektrische Signale umwandelt. Es sind auch schon mit einer Faseroptik ausgestattete Scanner bekannt, welche eine ganze Bildzeile auf einmal ausmessen können. Scanner, die ohne Relativbewegung zwischen Messkopf und Messobjekt eine grössere Messfläche punktweise mit für die Farbmessung ausreichender Genauigkeit und unter den für die Farbmessung allgemein üblichen, genormten geometrischen Verhältnissen ausmessen können, sind jedoch nicht bekannt.

Zur Abtastung von Bildern z.B. für Aufzeichnungszwecke werden anderseits Video-Kameras eingesetzt, die mit einem zweidimensionalen Bildsensor ausgestattet sind, auf den das komplette abzutastende Bild mittels des Kamera-Objektivs abgebildet wird, so dass keine Relativbewegung zwischen Kamera und Bild erforderlich ist. Der Bildsensor besteht in der Regel aus einer auf einen Chip integrierten zweidimensionalen Anordnung (Array) von Lichtwandlerelementen, üblicherweise auf CCD-Basis (charge coupled devices). Farbtaugliche Video-Kameras besitzen entweder mehrere Bildsensoren mit vorgeschalteten Farbfiltern oder einen Bildwandler mit integrierten Farbfiltern. Die Auflösung der Abtastung ist durch die Anzahl der für jeden Farbkanal verfügbaren Lichtwandlerelemente und durch den Abbildungsmassstab gegeben.

Weiterhin ist es aus der US 5,724,259 bekannt, Farbvideokameras für Farbmessungen ein zusetzen.

Die geometrischen Bedingungeh für die Farbmessung sind durch internationale Normen definiert. Für die üblicherweise verwendete 0°/45°-Messgeometrie soll die Beleuchtung unter 45°±5° zur Normalen auf die Messfläche erfolgen und das remittierte Messlicht unter einem Beobachtungswinkel von 0°±5° zur Normalen auf die Messfläche aufgefangen werden. Der Strahlengang kann auch umgekehrt gewählt werden.

Für die Farbmessung im Bild müssen diese Messbedingungen für jeden Messpunkt des Messobjekts erfüllt sein. Mit herkömmlichen Video-Kameras ist dies unter praktisch realisierbaren Abmessungen nicht erreichbar, da die Abstände der Lichtquelle und der Kamera vom Messobjekt dafür viel zu gross sein müssten.

Durch die vorliegende Erfindung soll nun eine Messvorrichtung der gattungsgemässen Art dahingehend verbessert werden, dass sie für Farbmessungen tauglich ist.

Die Lösung dieser der Erfindung zugrundeliegenden Aufgabe ergibt sich aus den im kennzeichnenden Teil des unabhängigen Anspruchs beschriebenen Merkmalen. Besonders vorteilhafte Ausgestaltungen und Weiterbildungen sind Gegenstand der abhängigen Ansprüche.

Ganz besonders vorteilhaft ist es, wenn für die Erzeugung der Parallel-Beleuchtung Fresnel-Linsen eingesetzt werden. Zu dem lassen sich auf diesen unmittelbar Verlaufsfilter anbringen, mittels welcher auf einfache Weise eine Homogenisierung der Ausleuchtung des Messobjekts erreicht werden kann.

Ein weiteres Problem bei der farbmetrischen Ausmessung grösserflächiger Messobjekte mittels einer Video-Kamera besteht darin, dass einerseits die optischen Abbildungsmittel mit vernünftigem Aufwand nicht ganz frei von geometrischen Verzeichnungen realisierbar sind und mehr oder weniger ausgeprägte Reflexionsbilder erzeugen und dass anderseits aufgrund zwangsläufig fehlender Messblenden oder sonstiger Abschirmungsorgane Streulichteffekte zwischen den einzelnen Bildpunkten des Messobjekts auftreten und mitgemessen werden. Ferner sind insbesondere bei grösseren Messobjekten die Einfallswinkel des Messlichts auf die zur spektralen Aufspaltung eingesetzten Filter nicht in allen Bildpunkten gleich, wodurch auch spektrale Fehler auftreten.

Es ist daher eine weitere wichtige Aufgabe Mittel und Wege aufzuzeigen, wie die genannten Störeffekte korrigiert werden können, so dass die Messdaten die für farbmetrische Anwendungen erforderliche Präzision aufweisen.

Die Lösung dieser weiteren Aufgabe ist durch die im folgenden beschriebenen Korrekturmassnahmen gegeben. Ganz besonders zweckmässig ist es, wenn die die Korrekturmassnahmen realisierende Datenverarbeitungsstufe alle angeführten Korrekturmassnahmen durchführt, also eine Geometrie-Korrektur, eine Reflex-Korrektur, eine Streulicht-Korrektur, eine Weiss-Normalisierung, eine Rand-Weiss-Normalisierung und eine Spektral-Korrektur.

Im folgenden wird die Erfindung anhand der Zeichnung näher erläutert. Darin zeigen:

Fig. 1      eine schematische Skizze einer Spektral-Video-Kamera eines Ausführungsbeispiels der erfindungsgemässen Messvorrichtung,

Fig. 2      eine Skizze zur Erläuterung der geometrischen Entzerrung der Daten des Messobjekts,

Fig. 2a     einen vergrösserten Ausschnitt aus Fig. 2,

Figs. 3,4     zwei Skizzen zur Erläuterung der Reflex-Korrektur,

Fig. 5     eine Skizze zur Erläuterung der Streulicht-Korrektur,

Fig. 5a     einen vergrösserten Ausschnitt aus Fig. 5,

Figs. 6a,b     zwei Testbilder mit je einem speziellen Kalibrierungselement,

Fig. 7     ein Testbild mit einem speziellen Streulicht-Element,

Fig. 7a     das Streulicht-Element der Fig. 7 in vergrösserter Darstellung,

Fig. 8     ein Diagramm zur Erläuterung der Berechnung von Streulicht-Koeffizienten und

Fig. 9     eine schematische Zusammenstellung aller Korrekturmassnahmen.

Eine Möglichkeit zur simultanen Messung des gesamten Spektrums besteht gemäss der Erfindung in der Verwendung mehrerer Video-Kameras, von denen jede einen schmalen Spektralbereich von etwa 20 nm Bandbreite misst und die z.B. in einer 4*4 Matrix um die optische Achse der Telelinse gruppiert sind. Eine solche Anordnung ermöglicht die volle Auflösung der eingesetzten Bildsensoren und hat auch die volle Lichtempfindlichkeit. Nachteilig ist dabei allerdings, dass keine exakte parallele telezentrische Abbildung für alle Kameras möglich ist. Auch haben die Kameras infolge der exzentrisch versetzten Anordnung unterschiedliche geometrische Verzeichnungen. Diese können jedoch rechnerisch durch eine entsprechende Transformation der Bildkoordinaten korrigiert werden.

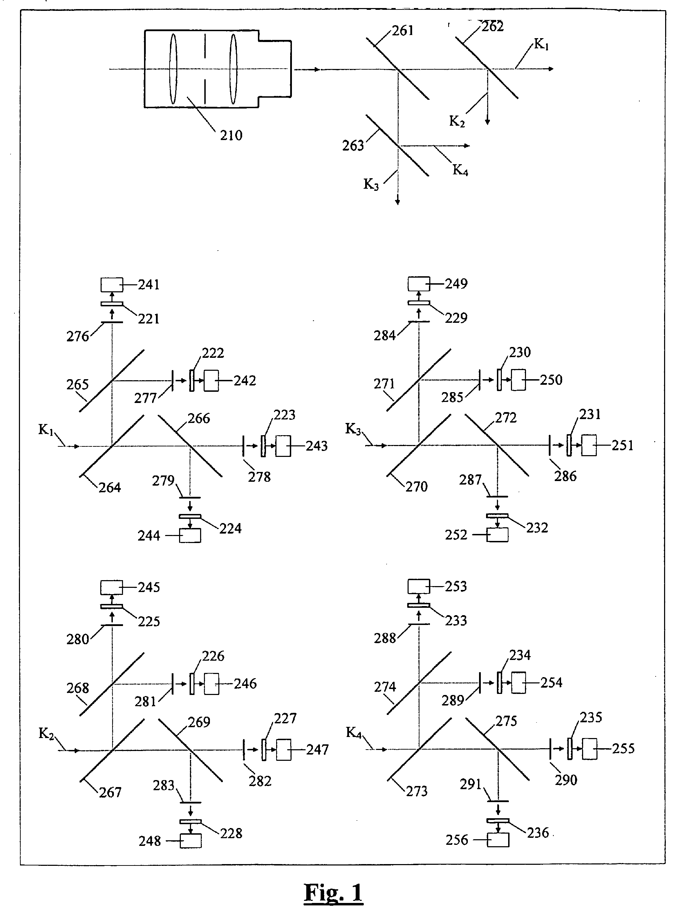

Mit der erfindungsgemässen Messvorrichtung kann eine simultane Spektralmessung durch den Einsatz einer speziell ausgebildeten Spektral-Video-Kamera realisiert werden. Ein Prinzip-Schema einer solchen Spektral-Video-Kamera ist in Figur 1 dargestellt.

Das wesentlichste Merkmal der als Ganze mit 200 bezeichneten Kamera besteht darin, dass sie nicht nur einen einzigen sondern 16 gleichartige Bildsensoren 221-236 und entsprechende zugeordnete Signalaufbereitungselektroniken 241-256 sowie eine im wesentlichen durch Interferenzspiegel realisierte farbselektive Strahlenteileranordnung 261-291 aufweist, welche das vom Abbildungsobjektiv 210 der Kamera 200 kommende Messlicht in 16 schmalbandige Spektralbereiche aufteilt und jeden Spektralbereich auf je einen der Bildsensoren 221-236 lenkt. Die Signalaufbereitungselektroniken 241-256 können selbstverständlich auch zu einer einzigen Einheit zusammengefasst sein.

Da es in der Praxis schwierig ist, die Wellenlängenbereichsübergänge von Interferenzspiegeln ausreichend schmalbandig auszuführen, wird das Messlicht gemäss einem weiteren Aspekt der Erfindung zuerst mittels dreier halbdurchlässiger Spiegel 261-263 in an sich bekannter Weise farbneutral in vier Kanäle $K_1$-$K_4$ zu je 25% Intensität aufgesplittet. In jedem dieser vier Kanäle $K_1$-$K_4$ sind drei farbselektive Strahlenteilerspiegel 264-266, 267-269, 270-272 und 273-275 angeordnet, welche jeden Kanal in vier Spektralbereiche aufteilen. Zur sauberen Bandbreitenbegrenzung und exakten Anpassung der Spektralcharakteristik befinden sich nach 8 dieser farbselektiven Strahlenteilerspiegel je zwei Bandpassfilter 276-291 mit einer Bandbreite von etwa 20 nm. Insgesamt decken die Spektralbereiche bzw. Bandpassfilter den Wellenlängenbereich von 400-700 nm ab. Unmittelbar nach den Bandpassfiltern sind die Bildsensoren 221-236 angeordnet.

Die Tabelle 1 zeigt die Übergangswellenlängen der beispielsweise verwendeten farbselektiven Strahlenteilerspiegel 264-266, 267-269, 270-272 und 273-275 und die Mittenwellenlängen der jeweils nachgeschalteten Bandpassfilter 276-291.

| Strahlenteilerspiegel | Übergangswellenlänge [nm] | Bandpassfilter | Mittenwellenlänge [nm] |
|---|---|---|---|
| 264 | 520 | | |
| 265 | 440 | 276 | 400 |
| | | 277 | 480 |
| 266 | 600 | 278 | 640 |
| | | 279 | 560 |
| 267 | 540 | | |

Tabelle fortgesetzt

| Strahlenteilerspiegel | Übergangswellenlänge [nm] | Bandpassfilter | Mittenwellenlänge [nm] |
|---|---|---|---|
| 268 | 460 | 280 | 420 |
| | | 281 | 500 |
| 269 | 620 | 282 | 620 |
| | | 283 | 580 |
| 270 | 560 | | |
| 271 | 480 | 284 | 440 |
| | | 285 | 520 |
| 272 | 640 | 286 | 680 |
| | | 287 | 600 |
| 273 | 580 | | |
| 274 | 500 | 288 | 460 |
| | | 289 | 540 |
| 275 | 660 | 290 | 700 |
| | | 291 | 620 |

Tabelle 1

Die farbneutralen halbdurchlässigen Spiegel sind vorzugsweise in an sich bekannter Weise durch Grenzflächen von im wesentlichen etwa halbwürfelförmigen Glasprismen realisiert. In analoger Weise sind die durch Interferenzfilter realisierten farbselektiven Strahlenteilerspiegel auf Grenzflächen von Glasprismen aufgebracht. Die Bandpassfilter sind ebenfalls direkt auf den Glasprismen aufgebracht, und die Bildsensoren sind unmittelbar an den Glasprismen montiert. Die einzelnen Glasprismen sind mit optischem Kontakt aneinandergefügt, so dass durch Medium-Übergänge bedingte Verluste vermieden werden. Die Glasprismen sind räumlich gegenseitig so angeordnet und orientiert, dass eine kompakte Konfiguration entsteht und alle Bildsensoren Platz haben.

Der Strahlenteiler kann auch direkt anschliessend an die Telelinse angeordnet werden. Es braucht dann zwar für jeden Kanal ein Objektiv, dafür sind aber bei einer solchen Anordnung die kleineren Oeffnungswinkel vorteilhaft.

Mit idealen Strahlenteilerspiegeln in einer 1-2-4-8-Anordnung ist es im Prinzip möglich, das Spektrum in 16 Spektralbereiche zu je 20 nm Bandbreite verlustfrei aufzuteilen, so dass jeder Bildsensor 100% Licht (seines Wellenlängenbereichs) bekommt. Die Bandcharakteristiken werden dabei allein durch die Spiegelinterferenzschichten bestimmt, es sind also keine zusätzlichen Bandpassfilter erforderlich.

Die Tabelle 2 zeigt die Übergangswellenlängen einer solchen 1-2-4-8-Anordnung von (idealen) Strahlenteilerspiegeln sowie die Mittenwellenlängen der resultierenden Spektralbereiche.

Tabelle 2

| Übergangswellenlängen [nm] | Mittenwellenlängen [nm] | Interferenz-Strahlenteiler | | Spektralbereiche |
|---|---|---|---|---|
| 550 | 470 | 430 | 410 | 400 |
| | | | | 420 |
| | | | 450 | 440 |
| | | | | 460 |
| | | 510 | 490 | 480 |
| | | | | 500 |
| | | | 530 | 520 |
| | | | | 540 |
| | 630 | 590 | 570 | 560 |
| | | | | 580 |
| | | | 610 | 600 |
| | | | | 520 |
| | | 670 | 650 | 640 |
| | | | | 660 |
| | | | 690 | 680 |
| | | | | 700 |

Eine Simultan-Video-Kamera mit 16 Spektralbereichen ist recht aufwendig in der Herstellung. Ein Kompromiss zwischen einer solchen Spektral-Kamera und einer X,Y,Z-Dreibereichskamera ist eine Kamera mit z.B. 7 Spektralbereichen, die mit entsprechenden Filtern aufgebaut werden kann. Fünf Filter haben dabei eine Bandbreite von je 30 nm und Mittenwellenlängen von 470, 500, 530, 560 und 590 nm. Ein Filter überdeckt den Wellenlängenbereich von 400-470 nm und bildet im Bereich von 400-450 nm die Z-Charakteristik gemäss CIE nach. Ein siebtes Filter überdeckt den Wellenlängenbereich von 590-700 nm und bildet im Bereich von 620-700 nm die X-Charakteristik gemäss CIE nach. Mit den genannten Filtern lassen sich die X,Y,Z-Charakteristiken gemäss CIE rechnerisch gut nachbilden, was für eine absolut genaue Farbmessung wichtig ist. Es kann noch ein weiteres Filter vorgesehen sein, welches im Infrarot-Bereich liegt und daher nicht zur Bestimmung von Farbmasszahlen verwendet werden kann. Dieses Infrarot-Filter ermöglicht aber in an sich bekannter Weise weitergehende Aufschlüsse über das Messobjekt, z.B. darüber, ob ein Bildpunkt schwarz erscheint durch den Überdruck der drei Buntfarben Cyan, Magenta und Gelb oder ob er mit schwarzer Druckfarbe bedruckt ist.

Die (beispielsweise rund 300000 * 16 bzw. 300000 * 18 einzelne Messwerte umfassenden) Rohmessdaten 71 werden, wie schon erwähnt, der Datenverarbeitungsstufe 7 zugeführt und in dieser nach verschiedenen Gesichtspunkten korrigiert. Das Ergebnis dieser diversen Korrektur-Operationen sind korrigierte Bilddaten 72, welche dann für die weitere Verwendung zur Verfügung stehen.

Vor den nachstehend beschriebenen eigentlichen Korrekturoperationen in der Datenverarbeitungsstufe 7 werden die Rohmessdaten 71 selbstverständlich noch bezüglich des Bildsensors 22 vorkorrigiert, indem die Dunkelmesswerte abgezogen und die einzelnen CCD-Elemente des Bildsensors 22 linearisiert werden. Diese Vorkorrektur ist bei Messungen mit Bildsensoren, speziell CCD-Bildsensoren allgemein bekannt und üblich und wird daher im folgenden nicht näher erläutert.

Geometriekorrektur:

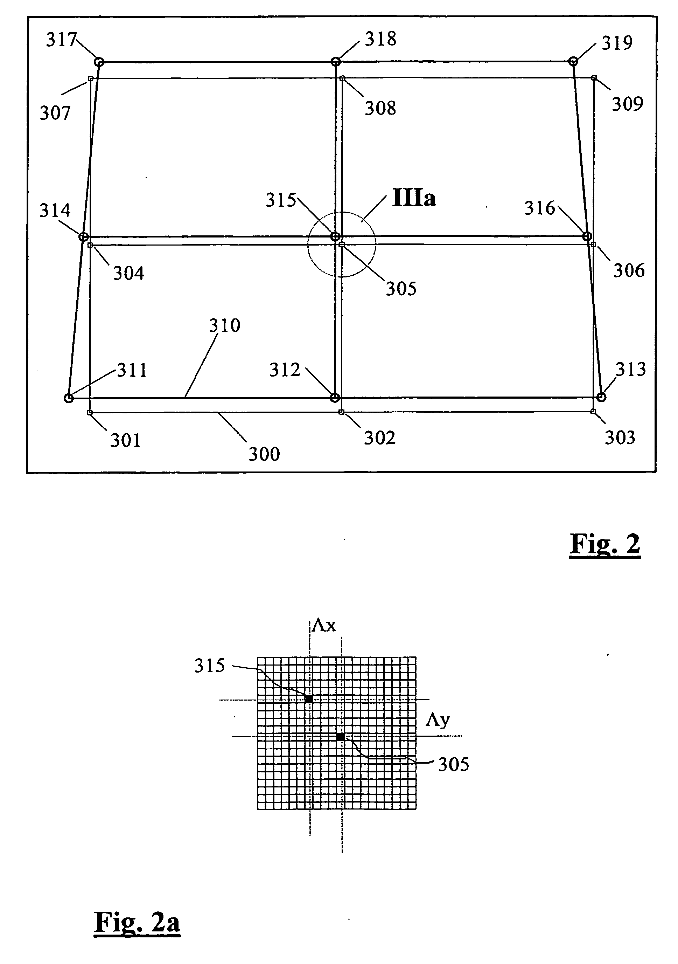

Das optische Abbildungssystem der Messvorrichtung ist in der Regel nicht absolut perfekt, sondern verursacht eine (idealerweise möglichst geringfügige) geometrische Verzerrung, die vor allen weiteren Operationen korrigiert werden muss. Fig. 2 veranschaulicht die diesbezügliche Vorgehensweise.

Mit der Messvorrichtung wird ein Testbild ausgemessen, welches ein Testmuster in Form eines rechteckigen Rahmens und ein mittig im Rahmen angeordneten Kreuzes aufweist. Die Eckpunkte des Rahmens und die Schnittpunkte des Rahmens mit dem Kreuz definieren neun Referenzpunkte, welche zur Bestimmung der geometrischen Verzerrungen herangezogen werden. In der Fig. 2 ist die theoretische Position und Form des Testmusters mit 300 bezeichnet, die entsprechenden Referenzpunkte sind mit 301 - 309 bezeichnet. Das tatsächlich gemessene (und durch das Abbildungssystem verzerrte) Testmuster ist mit dem Bezugszeichen 310 versehen, die entsprechenden Referenzpunkte sind mit 311 - 319 bezeichnet. Wie man aus (der stark übertrieben Darstellung) der Figur 2 erkennt, verursachte das Abbildungssystem im Beispiel eine Positionsverschiebung in zwei Dimensionen sowie eine Trapez-Verzerrung.

Nun werden für jeden der neun Referenzpunkte 311 - 319 die Positionsabweichungen $\Delta x$ und $\Delta y$ gegenüber den Sollpositionen (Punkte 301 - 309) bestimmt, wie dies anhand der Fig. 2a deutlich wird. Im nächsten Schritt werden anhand der Positionsabweichungen der neun Referenzpunkte durch Interpolation die Positionsabweichungen für jeden einzelnen Bildpunkt des gesamten Testbilds berechnet. Erfahrungsgemäss sind die Positionsabweichungen nahe beieinander liegender Bildpunkte nicht sehr unterschiedlich. Gemäss einem Aspekt der Erfindung werden daher jeweils mehrere, z.B. 8*8 beieinanderliegende Bildpunkte zu Geometriekorrekturbereichen zusammengefasst und nur die Positionsabweichungen für diese Geometriekorrekturbereiche berechnet. Bei angenommenen insgesamt 480*640 Bildpunkten ergibt dies beispielsweise 60*80 = 4800 Bereiche. Die (berechneten) Positionsabweichungen $\Delta x$ und $\Delta y$ dieser 4800 Geometriekorrekturbereiche werden in einer Geometriekorrekturtabelle abgespeichert. Ein Beispiel einer solchen Geometriekorrekturtabelle ist in der Tabelle 3 ausschnittsweise dargestellt ($\Delta x$- und $\Delta y$-Werte willkürlich).

Selbstverständlich kann zur Ermittlung der geometrischen Verzerrung des Abbildungssystems auch ein anderes Testmuster verwendet werden.

Für die geometrische Korrektur des Messobjekts wird für jeden Bildpunkt (anhand seiner Bildpunktkoordinaten) der Geometriekorrekturbereich festgestellt, zu welchem er gehört, und dann aus der Geometriekorrekturtabelle die Positionsabweichung $\Delta x$ und $\Delta y$ für den betreffenden Geometriekorrekturbereich entnommen. Die eigentliche Korrektur erfolgt dann in an sich bekannter Weise dadurch, dass der Messwert des betreffenden Bildpunkts durch den Messwert des um die Positionsabweichung versetzten Bildpunkts (bzw. bei nicht ganzzahligen Pixel-Abständen eines aus den Umgebungspunkten interpolierten Wertes) ersetzt wird.

Tabelle 3

| Bereich Nr.: | Bildpunkte: | $\Delta x$ (in Pixel): | $\Delta y$ (in Pixel): |
|---|---|---|---|
| 1 | x1...x8, y1...y8 | 3,25 | - 5.75 |
| 2 | x9...x16, yl...y8 | 3.2 | - 5.7 |
| u.s.w. | u.s.w. | u.s.w. | u.s.w. |

Nach der geometrischen Entzerrung des Messobjekts erfolgen die nachstehend erläuterten weiteren Korrekturmassnahmen, welche alle für jeden einzelnen Spektralkanal und jeweils in jedem Spektralkanal separat durchgeführt werden.

Eine erste wichtige Korrekturmassnahme besteht in einer Kontrast-Korrektur. Bedingt durch Eigenschaften realer (d.h. nicht-idealer) Objektive, Filter, Abschlussfenster des Bildsensors etc. liefert jeder Bildpunkt des Messobjekts auch einen nicht vemachlässigbaren Beitrag zur Helligkeit aller anderen Bildpunkte. Diese Beiträge sind einerseits abstandsabhängig und anderseits lageabhängig und insgesamt so gross, dass die geforderte Messgenauigkeit (< 1 dL*) nicht erreichbar ist. (dl* ist die Einheit des Helligkeitsfehlers im CIE-L*a*b* System.) Hier setzt nun die Kontrast-Korrektur ein.

Die Kontrast-Korrektur umfasst mindestens eine sog. Streulicht-Korrektur, bei der für jeden Bildpunkt der (abstandsabhängige) Streulichteinfluss der übrigen Bildpunkte auf den betreffenden Bildpunkt abgezogen wird. Der dafür (nach konventionellen Methoden) erforderliche Rechenaufwand wäre enorm und unpraktikabel (bei angenommenen 300'000 Bildpunkten 90 Milliarden Multiplikationen und ebensoviele Additionen sowie die einmalige Bestimmung der 90 Milliarden Multiplikationsfaktoren). Es wird daher gemäss einem wesentlichen Aspekt der Erfindung für die Streulicht-Korrektur nur ein verhältnismässig kleiner Umgebungsbereich (z.B. 16x16 Pixel) des jeweiligen Bildpunkts herangezogen und die Korrektur nur in einem inneren Kernbereich (z.B. 8x8 Pixel) dieses Umgebungsbereichs mit voller Auflösung durchgeführt. Ausserhalb dieses Bereichs erfolgt die Korrektur mit binär abnehmender Auflösung. Näheres ist weiter unten noch ausgeführt.

Vorzugsweise umfasst die Kontrast-Korrektur auch noch eine (vorangehende) sog. Reflex-Korrektur. Bei dieser - eine spezielle Form der Streulicht-Korrektur darstellenden - Korrekturmassnahme werden insbesondere vom Kamera-Objektiv erzeugte, punktsymmetrische Reflexionsbilder ("Geister-Bilder") von den Messdaten des Messobjekts abgezogen. Die (hauptsächlich lageabhängige) Reflex-Korrektur erfolgt anhand von aus Test-Bildern ermittelten Reflexkorrekturkoeffizienten und wird ebenfalls weiter unten noch näher erläutert. Die Reflex-Korrektur wird vor der Streulicht-Korrektur durchgeführt.

Weissnormalisierung:

Eine weitere wichtige Korrekturmassnahme besteht in einer Weissnormalisierung. Auch wenn die Bildausleuchtung des Messobjekts möglichst konstant und homogen erfolgt, ist zur exakten Remissionsmessung eine an sich bekannte Weissnormalisierung mit Hilfe eines Weissreferenzbildes erforderlich. Als Weissreferenzbild wird die mit dem Bildsensor 22 gemachte, wie vorstehend erläutert Streulicht-korrigierte und abgespeicherte Aufnahme (gemessene Remissionswerte) eines homogen weissen (körperlichen) Bildes mit (z.B. mittels eines separaten Spektralfotometers ermittelten) bekannten Referenz-Remissionswerten in jedem Spektralkanal verstanden. Das homogen weisse körperliche Bild kann als Bestandteil der Messvorrichtung ausgebildet sein und in der Ebene des Messobjekts in den Messstrahlengang einbringbar bzw. wieder aus diesem entfernbar angeordnet sein.

Zur Weissnormalisierung wird für jedes Bildelement (in jedem Spektralkanal) der Quotient des Remissionswerts des Messobjekts durch den entsprechenden (abgespeicherten) Remissionswert des Weissreferenzbilds berechnet. Das Ergebnis sind normalisierte Remissionswerte für jedes Bildelement in jedem Farbkanal. Absolute Remissionswerte erhält man durch Multiplikation der so normalisierten Remissionswerte mit den entsprechenden (bekannten) Referenz-Remissionswerten (absolute Weiss-Kalibrierungswerte) des homogenen weissen (körperlichen) Bilds. Die Weissnormalisierung ist an sich eine bekannte Korrekturmassnahme und bedarf deshalb keiner näheren Erläuterung.

Rand-Weissnormalisierung:

Ein weiterer wichtiger Korrekturschritt nach der Kontrast-Korrektur bzw. nach der Weissnormalisierung besteht in einer sog. Rand-Weiss-Normalisierung. Diese hat zum Ziel, die in der Praxis stets vorhandenen integralen Beleuchtungsschwankungen von Messobjektbelichtung zu Messobjektbelichtung zu kompensieren. Herangezogen wird dazu ein definierter Randbereich des schon im Zusammenhang mit der Weissnormalisierung erwähnten homogen weissen (körperlichen) Bilds oder eine entsprechende homogen weisse Objekt-Maske mit vorzugsweise gleichem Weiss-Ton wie das Bild. Alternativ kann ein das Messobjekt abschliessender weisser Randbereich desselben herangezogen werden. Falls der Randbereich des homogen weissen körperlichen Bilds verwendet wird, kann dieser gleichzeitig als Objekt-Maske dienen.

Aus den aktuell gemessenen Remissionswerten der zum herangezogenen Randbereich gehörenden Bildelemente (Pixel) wird die aktuelle mittlere Helligkeit (Mittelwert der Remissionswerte) des Randbereichs bestimmt. Ferner wird (aus den abgespeicherten Daten) die entsprechende mittlere Helligkeit für einen korrespondierenden Randbereich des Weissreferenzbilds bestimmt. Der Quotient der mittleren Helligkeiten des Randbereichs des Weissreferenzbilds und des aktuell gemessenen Randbereichs wird als Korrekturfaktor verwendet, mit welchem bei der Rand-Weiss-Normalisierung die Messobjekt-Messdaten multipliziert werden, so dass die mittlere Rand-Weiss-Helligkeit der aktuellen Messung nach der Rand-Weiss-Normalisierung mit derjenigen des Weissreferenzbilds übereinstimmt. Durch die Rand-Weiss-Normalisierung wird die mittlere Helligkeit der Rand-Weiss-Bereiche auf den Weiss-Kalibrierungswert gehoben bzw. gesenkt, und integrale Beleuchtungsschwankungen bei den einzelnen Messobjektbelichtungen werden auf diese Weise kompensiert.

Die so korrigierten Bilddaten können dann in beliebiger Weise ausgewertet bzw. weiter verarbeitet werden. Insbesondere können daraus in an sich bekannter Weise Farbmasszahlen der einzelnen Bildpunkte des Messobjekts errechnet und z.B. zur Steuerung einer Druckmaschine herangezogen werden.

Reflexkorrektur:

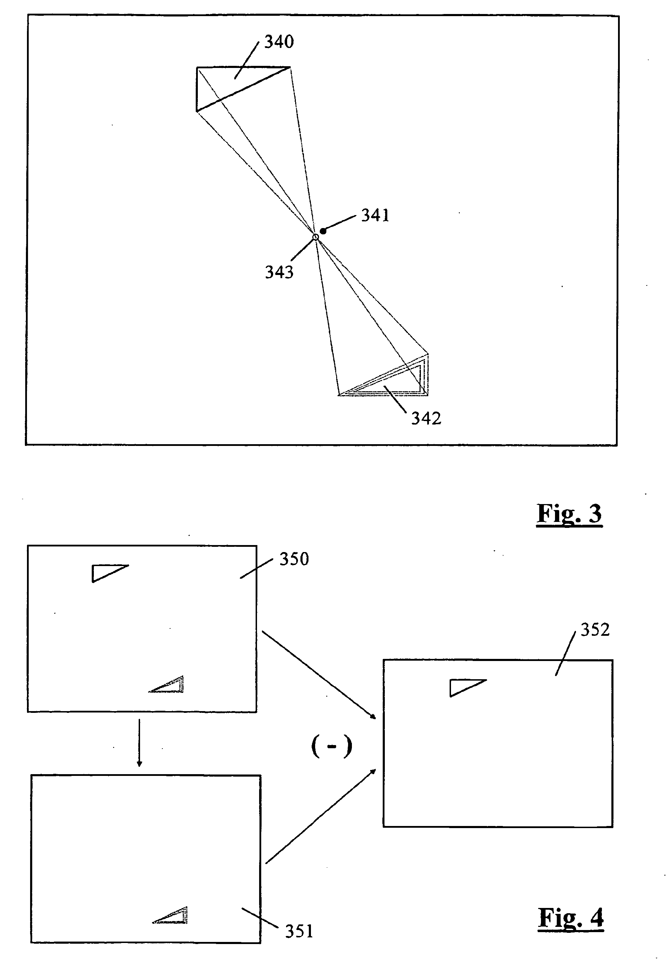

Wie schon erwähnt, erzeugt die Abbildungsoptik, speziell das Objektiv der CCD-Kamera, ein Reflexionsbild, welches im allgemeinen bezüglich der optischen Achse bzw. bezüglich des Bildmittelpunkts punktsymmetrisch zum eigentlichen Bildinhalt liegt. Das Reflexionsbild ist zwar relativ lichtschwach (Grössenordnung 0,2% der Helligkeit des Ausgangsbilds), aber doch deutlich feststellbar. Ausserdem ist das Reflexionsbild unscharf. Je nach Zentrierung der Linsen bzw. Objektive des Abbildungssystems kann das Symmetriezentrum auch leicht ausserhalb des Bildmittelpunkts liegen und ferner auch das Reflexionsbild etwas kleiner oder auch etwas grösser als das Ausgangsbild sein. In Fig. 3 ist die mit der Messvorrichtung erzeugte Aufnahme eines Messobjekts dargestellt, welches ein einzelnes helles Dreieck 340 aufweist, sonst aber überall schwarz ist. Der Bildmittelpunkt ist mit 341 bezeichnet. Wie man erkennt, enthält die Aufnahme ein Reflexionsbild 342, das bezüglich eines hier etwas neben dem Bildmittelpunkt 341 liegenden Symmetriezentrums 343 punktsymmetrisch zum Dreieck 340 liegt. Im gewählten Beispiel ist das Reflexionsbild 342 etwa gleich gross wie das Dreieck 340, die Vergrösserung beträgt also 1,0. Das Reflexionsbild 342 ist relativ unscharf, was in der Fig. 3 durch die dreifache und gestrichelte Darstellung angedeutet ist. Die Helligkeit des Reflexionsbilds 342 beträgt etwa 0,2% der Helligkeit des Dreiecks 340.

Messungen an verschiedenen Testbildern der in Figur 3 gezeigten Art haben ergeben, dass (für eine gegebene Messvorrichtung) die Helligkeit des Reflexionsbilds nur geringfügig abstandsabhängig ist und die Abstandsabhängigkeit mit für die Praxis ausreichender Genauigkeit linear angenähert werden kann. Beispielsweise beträgt die Helligkeit des Reflexionsbilds in den vom Symmetriezentrum entferntesten Bildpunkten ca. 0,25% und in der Nähe des Symmetriezentrums ca. 0,2% der Helligkeit der entsprechenden Bildpunkte des Originalbilds. Die Unschärfe des Reflexionsbilds entspricht einer Tiefpassfilterung mit etwa +/- 56 bis 64 Pixel Breite.

Zur Vorbereitung der Reflexionskorrektur werden empirisch durch Ausmessung mehrerer Testbilder die Lage des Symmetriezentrums 343 des Reflexionsbilds sowie die relativen Helligkeiten des Reflexionsbilds im zentralen und im peripheren Bildbereich und ein eventueller Vergrösserungs- bzw. Verkleinerungsfaktor als Korrektur-Parameter ermittelt.

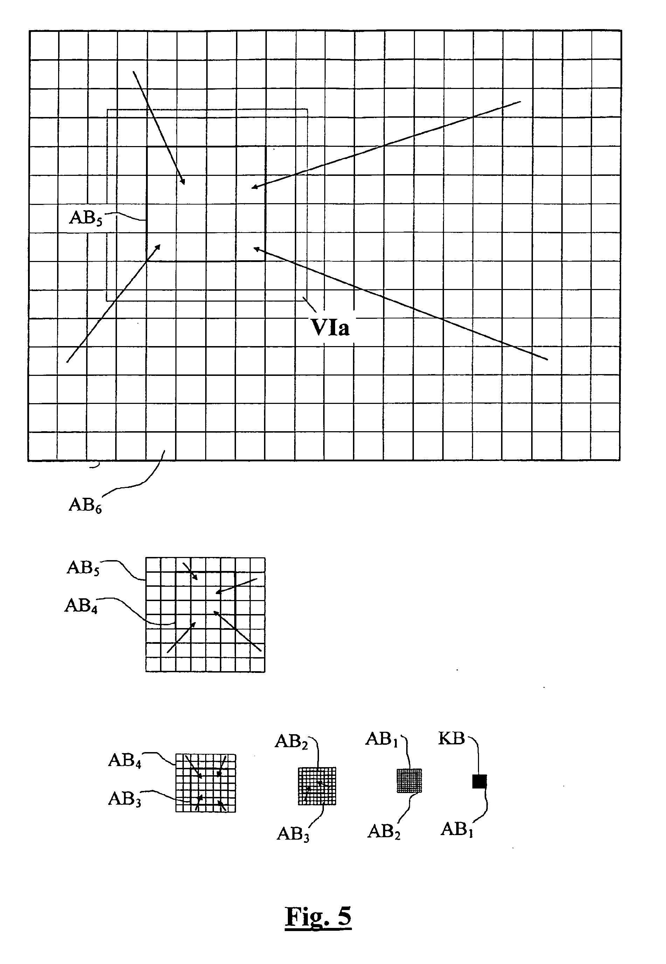

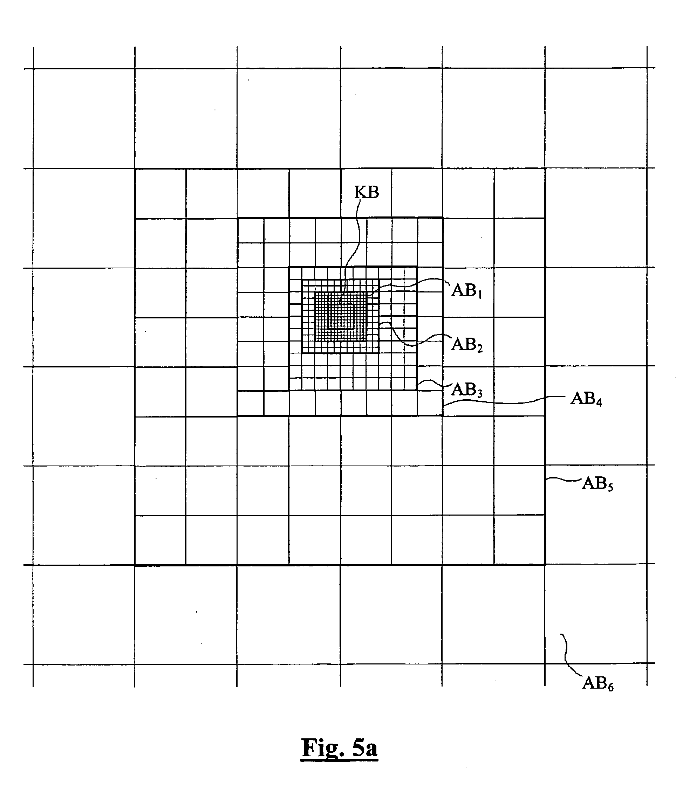

Mit diesen empirischen Korrektur-Parametern wird dann die Reflex-Korrektur so durchgeführt, dass aus dem gemessenen Bild durch Spiegelung um das Symmetriezentrum und Tiefpassfilterung ("Verunschärfung bzw. "Verschmierung), ggf. Vergrösserung bzw. Verkleinerung sowie (linear zwischen den Extremwerten interpolierte) abstandsabhängige Reduktion der Helligkeiten ein künstliches Reflexionsbild erzeugt und dieses dann vom Ausgangsbild abgezogen wird. Die Fig. 5 verdeutlicht dies. Das durch die unkorrigierten Messdaten dargestellte Bild ist mit 350, das berechnete "künstliche" Reflexionsbild mit 351 und das Reflex-korrigierte Bild mit 352 bezeichnet. Die Tiefpassfilterung erfolgt in an sich bekannter Weise durch laufende Mittelwertbildung über die jeweils ca. +/- (64/2) benachbarten Bildpunkte (in beiden Dimensionen). Die Spiegelung und Vergrösserung/Verkleinerung erfolgt nach den an sich bekannten Methoden der Bildverarbeitung durch Koordinatentransformationen.

Die gemäss Vorstehendem ermittelten Korrektur-Parameter sind erste Näherungen und ergeben in der Regel noch keine optimale Korrektur. In der Praxis müssen die Korrektur-Parameter ein bis mehrere mal iterativ angepasst werden, bis die Reflex-Korrektur befriedigende Ergebnisse liefert (Überprüfung durch Anzeige der Resthelligkeiten bzw. Restfehler). Wenn jedoch die optimalen Korrektur-Parameter einmal gefunden sind, können sie (für die gegebene Messvorrichtung) unverändert beibehalten werden.

Die vorstehend beschriebene Reflex-Korrektur ist relativ rechenaufwendig. Gemäss einem wichtigen Aspekt der Erfindung kann der Aufwand dadurch verringert werden, dass die Berechnung des künstlichen Reflexionsbilds mit geringerer Auflösung erfolgt. Welche Auflösung den idealen Kompromiss zwischen Rechenaufwand und Korrekturgenauigkeit ergibt, muss durch Ausprobieren herausgefunden werden. Bei einer praktischen Realisation der Messvorrichtung hat sich eine Auflösung von 1/8 der Auflösung der vollen Auflösung (des unkorrigierten Bilds) als geeignet erwiesen, wodurch der Rechenaufwand um den Faktor 64 sank. Die Berechnung von Hilfsbildern mit gröberer Auflösung erfolgt auf dieselbe Art und Weise wie weiter unten im Zusammenhang mit der Streulicht-Korrektur beschrieben.

Streulichtkorrektur:

Die Streulicht-Korrektur zieht für jeden Bildpunkt den abstandsabhängigen Helligkeitsbeitrag aller den Bildpunkt umgebenden Bildpunkte vom Helligkeitswert (Remissionswert) des betreffenden Bildpunkts ab. Der von einem Bildpunkt i von einem Bildpunkt j empfangene Helligkeitsbeitrag $\Delta R_{i,j}$ berechnet sich zu $\Delta R_{i,j} = k_{i,j} * R_j$. Dabei ist $R_j$ der Remissionswert des Bildpunkts j und $k_{i,j}$ ein vom Abstand zwischen den Bildpunkten i und j abhängiger Koeffizient, der natürlich vorher ermittelt worden sein muss. Für eine Anordnung von N*M Bildpunkten, die von 1 bis N*M durchnumeriert seien, berechnet sich für jeden Bildpunkt i der Beitrag der Umgebungspunkte wie folgt:

$$\Delta R_i = \sum_{j=1}^{N*M} k_{i,j} * R_j \qquad \text{(Formel 1)}$$

Der streulichtkorrigierte Remissionswert $R'_i$ beträgt $R_i - \Delta R_i$. Wie man leicht erkennt, sind zur Berechnung der Korrekturen $(N*M)^2$ Koeffizienten und dementsprechend viele Multiplikationen und Additionen erforderlich. Bei 300'000 Bildpunkten wäre, wie schon erwähnt, der dafür erforderliche Rechenaufwand gigantisch und völlig unpraktikabel.

Erfindungsgemäss wird nun so vorgegangen, dass jeweils nur für einen relativ kleinen Bildbereich (typisch 16*16 Pixel) und innerhalb desselben auch nur für einen noch kleineren Kernbereich (typisch 8*8 Pixel) eine Korrektur mit voller Auflösung erfolgt. Ausserhalb des genannten Bildbereichs erfolgt die Korrektur mit vorzugsweise binär gestufter, mit zunehmender Entfernung geringerer Auflösung. Selbstverständlich ist auch eine andere als binäre Abstufung der Auflösung möglich.

Dafür werden aus dem Bild mit voller Auflösung (Rohmessdaten bzw. bereits Reflex-korrigierte Messdaten) z.B. fünf Hilfsbilder mit binär abgestufter Auflösung mit festem Bezug zum Bildrand berechnet. Das durch die Rohdaten bzw. Reflex-korrigierten Messdaten definierte Bild mit der vollen Auflösung ist im folgenden als Ausgangsbild bezeichnet. Die Hilfsbilder haben 1/2, 1/4, 1/8, 1/16 und 1/32 der Auflösung des Ausgangsbilds. Die Korrekturen werden aus dem Ausgangsbild und den Hilfsbildern ermittelt. Zur Berechnung eines Hilfsbilds mit der nächstniedrigeren (halben) Auflösung werden in an sich bekannter Weise jeweils 4 benachbarte Bildpunkte zusammengefasst, wobei der Mittelwert der Remissionen dieser 4 Bildpunkte den Remissionswert des entsprechenden Bildpunkts des gröberen Hilfsbilds darstellt.

Für das folgende wird zur Illustration rein beispielsweise für das Ausgangsbild eine (durch den Bildsensor gegebene) höchste Auflösung von 480*640 entsprechend 307'200 Bildpunkten zugrundegelegt. Entsprechend weisen dann die fünf Hilfsbilder Auflösungen von 240*320 (76'800 Bildpunkte), 120*160 (19'200 Bildpunkte), 60*80 (4800 Bildpunkte), 30*40 (1200 Bildpunkte) und 15*20 (300 Bildpunkte) auf.

Nun werden jeweils 8*8 Pixel umfassende Kernbereiche so festgelegt, dass sie einerseits das gesamte Bild (höchster Auflösung) überlappungsfrei und lückenlos abdecken und anderseits in die Raster der Hilfsbilder mit binär abgestufter Auflösung passen. Die Positionen bzw. Koordinaten (z.B. eines Eckpunkts) der Kernbereiche bezüglich der Raster des Bilds mit voller Auflösung und jedes Hilfsbilds werden gespeichert. Die Kernbereiche decken sich mit den Bildpunkten des Hilfsbilds mit 1/8 Auflösung.

Gemäss der Erfindung wird die Streulicht-Korrektur für jede Auflösung separat berechnet. Für das Ausgangsbild mit der vollen Auflösung und die Hilfsbilder mit den binär abgestuften Auflösungen werden (für jeden Bildpunkt des Ausgangsbilds) sechs Streulichtbeiträge von definierten Auswertungsbereichen berechnet. Die sechs Streulichtbeiträge werden zu einem Gesamt-Streulichtbeitrag aufaddiert und letzterer schliesslich von den Rohdaten der einzelnen Bildpunkte subtrahiert.

Die folgenden Operationen beziehen sich jeweils auf einen 8*8-Kernbereich und werden für alle Kernbereiche (sequentiell) durchgeführt.

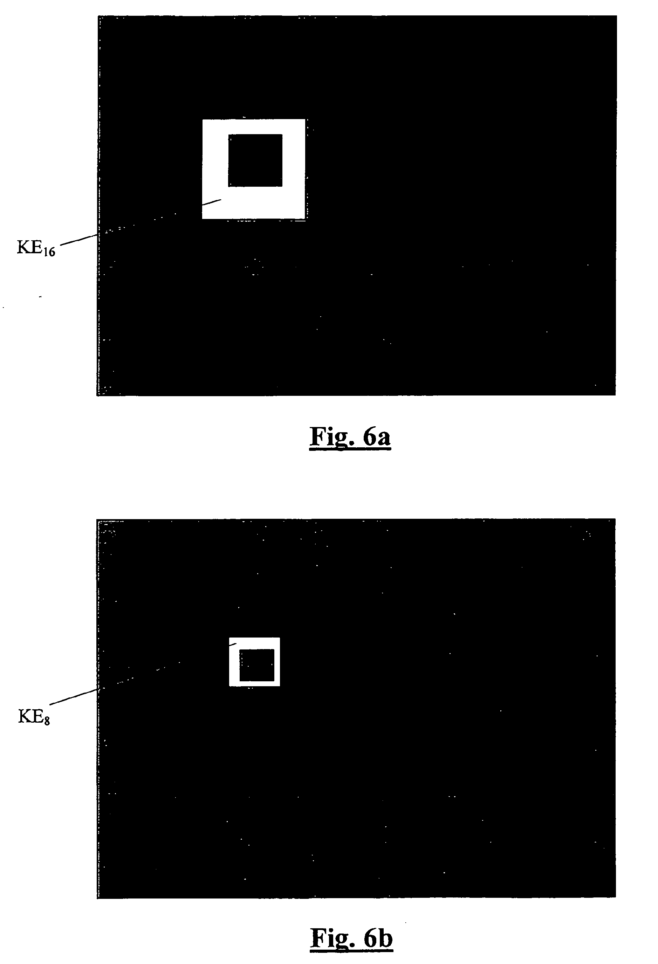

Für die Berechnung der Streulichtkorrektur eines beliebigen Bildpunkts des Ausgangsbilds mit der vollen Auflösung wird zunächst (aus den zuvor definierten Kernbereichen) derjenige 8*8-Kernbereich KB bestimmt, in welchem der zu korrigierende Bildpunkt liegt. Anschliessend wird für diesen Kernbereich für das Ausgangsbild und die fünf Hilfsbilder mit binär abgestufter Auflösung je ein Auswertungsbereich $AB_1 - AB_6$ festgelegt, der einerseits den Kernbereich KB abdeckt und anderseits mit dem Raster des jeweils gröberen Hilfsbilds übereinstimmt, wobei sich die Bereichsgrenzen mit den Bildelementgrenzen gleicher Auflösung decken müssen. Dadurch können die gleichen Hilfsbilder abgestufter Auflösung für alle Bildpunkte des Bilds verwendet werden. Eine mögliche beispielsweise Festlegung der sechs Auswertungsbereiche ist in den Figuren 6 und 6a dargestellt. Der äusserste Auswertungsbereich $AB_6$ bedeckt das gesamte Hilfsbild mit 1/32 Auflösung (Fig. 5). Die innersten fünf Auswertungsbereiche $AB_1 - AB_5$ sind deutlich kleiner (Fig. 5a). Die nachstehende Tabelle 4 fasst die charakteristischen Daten der einzelnen (beispielsweisen) Bereiche zusammen:

Tabelle 4

| Bereich | Auflösung | Dimension | Anzahl Elemente |
|---|---|---|---|
| Kernbereich KB | 1/1 | 8*8 | 64 |
| Auswertungsbereich 1 | 1/1 | 1.6*16 | 256 |
| Auswertungsbereich 2 | 1/2 | 12*12 | 144 |
| Auswertungsbereich 3 | 1/4 | 10*10 | 100 |
| Auswertungsbereich 4 | 1/8 | 8*8 | 64 |

Tabelle fortgesetzt

| Bereich | Auflösung | Dimension | Anzahl Elemente |
|---|---|---|---|
| Auswertungsbereich 5 | 1/16 | 8*8 | 64 |
| Auswertungsbereich 6 | 1/32 | 15*20 | 300 |

Die Festlegung der Dimensionen der Auswertungsbereiche erfolgt empirisch, so dass sich eine genügende Streulichtkorrektur ergibt. Je grösser die Auswertungsbereiche mit höherer Auflösung gewählt werden, desto besser ist die Korrektur, wobei aber gleichzeitig auch der Berechnungsaufwand steigt. Die beispielsweise Dimensionierung gemäss Tabelle 4 liefert die erforderliche Korrekturgenauigkeit bei vertretbarem Rechenaufwand.

Die relativen Lagen des Kernbereichs und der Auswertungsbereiche in den jeweils grösseren Auswertungsbereichen ändert sich natürlich je nach dem, wo der Kernbereich im Bild bzw. äussersten Auswertungsbereich liegt. Massgebend ist die Bedingung, dass die Bereichsgrenzen mit dem Raster des jeweils gröberen Hilfsbilds übereinstimmten und sich die Bereichsgrenzen mit den Bildelementgrenzen gleicher Auflösung decken müssen. Mit dieser Bedingung (und den einmal festgelegten Dimensionen) können die Auflösungsbereiche - abgesehen von gleichwertigen symmetrischen Lösungen - eindeutig festgelegt (berechnet) und abgespeichert werden.

Streulichtkorrektur eines Kernbereichs von 8*8 Pixel:

Beginnend mit der gröbsten Bildauflösung (15*20) werden nun die Streulichtbeiträge der Bildpunkte des gröbsten Auswertungsbereichs $AB_6$ auf die Bildpunkte des nächst inneren Auswertungsbereichs $AB_5$ berechnet (vgl. auch Fig. 5). Da im Auswertungsbereich $AB_5$ insgesamt 16 Bildpunkte des Auswertungsbereichs $AB_6$ liegen, sind für die Berechnung der Streulichtanteile für den aktuellen Auswertungsbereich $AB_5$ 16*(300-16) = 4544 Korrektur-Koeffizienten erforderlich, für das gesamte Hilfsbild mit 1/32 Auflösung sind es 300*300 = 90'000 Koeffizienten. Die Streulichtbeiträge des Auswertungsbereichs $AB_6$ werden zwischengespeichert.

Zudem werden die Hilfsbilddaten des Auswertungsbereichs $AB_5$ in einen Datenpuffer kopiert und von diesen Daten die Streulichtbeiträge des ringförmigen Auswertungsbereichs $AB_6$ subtrahiert. Dies erfolgt in Vorbereitung der Streulichtberechnung für den nächst inneren Auswertungsbereich, damit die vom Streulicht des ringförmigen Auswertungsbereichs $AB_6$ befreiten Werte zur Verfügung stehen, denn nur diese Werte erzeugen einen weiteren Streulichtanteil für die folgenden Auswertungsbereiche.

Nun werden in analoger Weise die Streulichtbeiträge der Bildpunkte des bereits von den Streulichtbeiträgen des Auswertungsbereichs AB6 befreiten Auswertungsbereichs $AB_5$ (Daten aus dem Datenpuffer) auf die Bildpunkte des nächst inneren Auswertungsbereichs $AB_4$ berechnet. Im Auswertungsbereich $AB_4$ liegen 16 Bildpunkte des Auswertungsbereichs $AB_5$, daher sind für die Berechnung 16*(64-16) = 768 Korrektur-Koeffizienten erforderlich, für den gesamten Auswertungsbereich $AB_5$ sind es 64*64 = 4096 Koeffizienten. Die Streulichtbeiträge des Auswertungsbereichs $AB_5$ werden zwischengespeichert, und die Hilfsbilddaten des nächst inneren Auswertungsbereichs $AB_4$ werden in einen weiteren Datenpuffer kopiert. Ferner werden von diesen Hilfsbilddaten in analoger Weise die Streulichtbeiträge des ringförmigen Auswertungsbereichs $AB_5$ subtrahiert, so dass für den folgenden Schritt wiederum streulichtbereinigte Daten zur Verfügung stehen.

In analoger Weise werden fortlaufend die Streulichtbeiträge der Bildpunkte der (bereits streulichtbereinigten) Auswertungsbereiche $AB_4$, $AB_3$, $AB_2$ und $AB_1$ auf die Bildpunkte der jeweils nächst inneren Auswertungsbereiche $AB_3$, $AB_2$, $AB_1$ und jeden der 8*8 Bildpunkte des Kernbereichs KB berechnet und zwischengespeichert. Dazu sind, wie anhand der Fig. 6a nachgezählt werden kann, 975, 2304, 5120 und 16384 bzw. 4096, 10000, 20736 und 65536 Korrektur-Koeffizienten erforderlich. (Mit Ausnahme des Kernbereichs wird für jeden Auswertungsbereich jeweils nur der Einfluss des umgebenden Ringbereichs auf den inneren Zentralbereich berechnet - vgl. auch Fig. 5.)

Nach Durchführung dieser Berechnungen liegen für alle 8*8 Bildpunkte des Kernbereichs jeweils die sechs Streulichtbeiträge der Auswertungsbereiche $AB_1$ - $AB_6$ vor. Diese sechs Streulichtbeiträge werden für jeden Bildpunkt des Kernbereichs KB zu einem Gesamt-Streulichtbeitrag aufaddiert, wobei der Streulichtbeitrag jedes Bildpunkts jeweils an vier Bildpunkte des Hilfsbilds nächsthöherer Auflösung übertragen wird. Der Gesamt-Streulichtbeitrag (oder -anteil) wird dann vom (ggf. vorher Reflexkorrigierten) Remissionswert des jeweiligen Bildpunkts des Kernbereichs abgezogen.

Streulichtkorrektur des ganzen Bilds:

Für die Streulichtkorrektur der übrigen Bildpunkte des Ausgangsbilds werden dieselben Berechnungen für alle übrigen Kernbereiche durchgeführt. Dabei werden gemäss einem weiteren wichtigen Gedanken der Erfindung immer dieselben (im hier beschriebenen Ausführungsbeispiel insgesamt 194464) Korrektur-Koeffizienten verwendet. Für jeden Kernbereich ist natürlich tatsächlich immer nur eine Teilmenge (hier z.B. 30095) aus den insgesamt 194464 Korrektur-Koeffizienten erforderlich. Die für jeden Kernbereich effektiv benutzten Korrektur-Koeffizienten sind durch die relativen Positionen des Kernbereichs und der Auswertungsbereiche festgelegt.

Wie die vorstehenden Zahlenbeispiele verdeutlichen, ist der Rechenaufwand bei der erfindungsgemässen Streulicht-Korrektur um Grössenordnungen geringer als bei der klassischen Vorgehensweise. Die Streulicht-Korrektur wird auf diese Weise überhaupt erst praktisch machbar.

Streulichtkorrektur einzelner Bildbereiche:

In praktischen Anwendungen interessieren oft nur die Spektren oder Farbmasszahlen aus bestimmten Bildbereichen. In diesen Fällen genügt eine Streulichtkorrektur für die Bildpunkte dieses bzw. dieser Bildbereiche. Es werden daher die Streulichtkorrekturen nur für diejenigen Kernbereiche berechnet, die mindestens einen Bildpunkt der interessierenden Bildbereiche enthalten.

Bestimmung der Streulichtkorrekturkoeffizienten:

Im folgenden wird die Bestimmung der für die Streulicht-Korrektur erforderlichen Korrektur-Koeffizienten erläutert.

Die in der weiter oben stehenden Formel 1 verwendeten $(N*M)^2$ Korrektur-Koeffizienten $k_{i,j}$ lassen sich als Koeffizienten-Matrix organisieren. Wenn anderseits $(s_{i,j})$ eine Streulichtkoeffizientenmatrix darstellt, deren Elemente $s_{i,j}$ den Streulichteinfluss $\Lambda R_{i,j}$ jedes einzelnen Bildpunkts i auf jeden einzelnen Bildpunkt j beschreiben, so dass die Formel $\Lambda R_{ij} = s_{i,j}*R_i$ gilt, dann ist die Korrektur-Koeffizientenmatrix offensichtlich die inverse Matrix von $(s_{i,j})$. Wenn die Elemente der Streulichtkoeffizientenmatrix $(s_{i,j})$ bestimmt sind, lassen sich daher daraus durch Invertierung die Elemente der Korrektur-Koeffizientenmatrix berechnen.

Die Elemente der Streulichtkoeffizientenmatrix $(s_{i,j})$ lassen sich durch Streulichtmessungen an Testbildern bestimmen. Prinzipiell kann dazu wie folgt vorgegangen werden: Für einen Bildpunktbereich von beispielsweise 16*16 Bildpunkten werden Testbilder mit jeweils nur einem einzigen hell weissen Bildpunkt verwendet, alle anderen Bildpunkte sind schwarz. Gemessen wird die Remission $R_i$ des einen weissen Punkts und die durch den Streulichteinfluss des einen weissen Punkts erzeugten Remissionen $\Lambda R_{i,j}$ aller übrigen Bildpunkte. Die Messwerte werden dann in die Streulicht-Matrizen-Gleichung eingesetzt und daraus die Streulichtkoeffizienten $s_{i,j}$ als Unbekannte berechnet.

Für die eindeutige Bestimmung der Elemente einer Streulichtkoeffizientenmatrix sind genausoviele unabhängige Messungen wie die Anzahl der unabhängigen Matrix-Elemente erforderlich. Für die weiter oben erläuterten sechs Korrektur-Koeffizienten-Matrizen der sechs Auflösungsstufen (die sich ja als Inverse zu entsprechenden sechs Streulichtkoeffizientenmatrizen berechnen lassen) mit insgesamt 194464 Koeffizienten wären entsprechend mindestens 194464 Messvorgänge erforderlich. Dies ist natürlich nicht praktikabel. Ausserdem lassen sich die extrem geringen Streulichtbeiträge einzelner Bildpunkte nicht genügend präzis messen.

Um den Aufwand zur Bestimmung der Korrektur-Koeffizienten zu reduzieren, wird von der Tatsache Gebrauch gemacht, dass der Streulichteinfluss im Rahmen der hier erforderlichen Genauigkeit nicht ortsabhängig sondern nur abstandsabhängig ist. Erfindungsgemäss wird wie folgt vorgegangen:

Es werden z.B. acht Testbilder mit speziellen Streulichtelementen angefertigt und mit der Messvorrichtung vermessen (ausgewertet). Jedes Streulichtelement besteht (ähnlich den Kalibrierungselementen) aus einem einzigen weissen Kreisring. Die (mittleren) Radien und Ringbreiten der Streulichtelemente sind für jedes Testbild unterschiedlich. Insgesamt sind acht verschieden grosse Streulichtelemente vorgesehen, deren mittlere Radien beispielsweise rund 2, 4, 8, 16, 25, 50, 100 und 200 Pixel betragen. Die Ringbreiten variieren von ca. 1 Pixel beim kleinsten bis zu etwa 40 Pixel beim grössten Ring. Jedes Testbild enthält vorzugsweise mehrere gleiche Streulichtelemente, um mehrere Messresultate zu erhalten und den Messfehler auf diese Weise reduzieren zu können. Insbesondere die kleinsten Streulichtelemente sind insofern etwas kritisch, als das Messzentrum (Pixel) nicht immer genau in die Kreisringmitte fällt. Es werden daher vorzugsweise auf diesen Testbildern Gruppen von Streulichteleinenten vorgesehen, wobei die Elemente einer Gruppe bezüglich des Pixel-Rasters jeweils um ½ Pixel oder ¼ Pixel versetzt sind. Auf diese Weise liegt mindestens in einem Streulichtelement der Gruppe immer ein Pixel genügend genau im Zentrum des Streulichtelements. Verwendet werden dann die Messwerte aus diesem Streulichtelement (erkennbar am geringsten Streulicht).

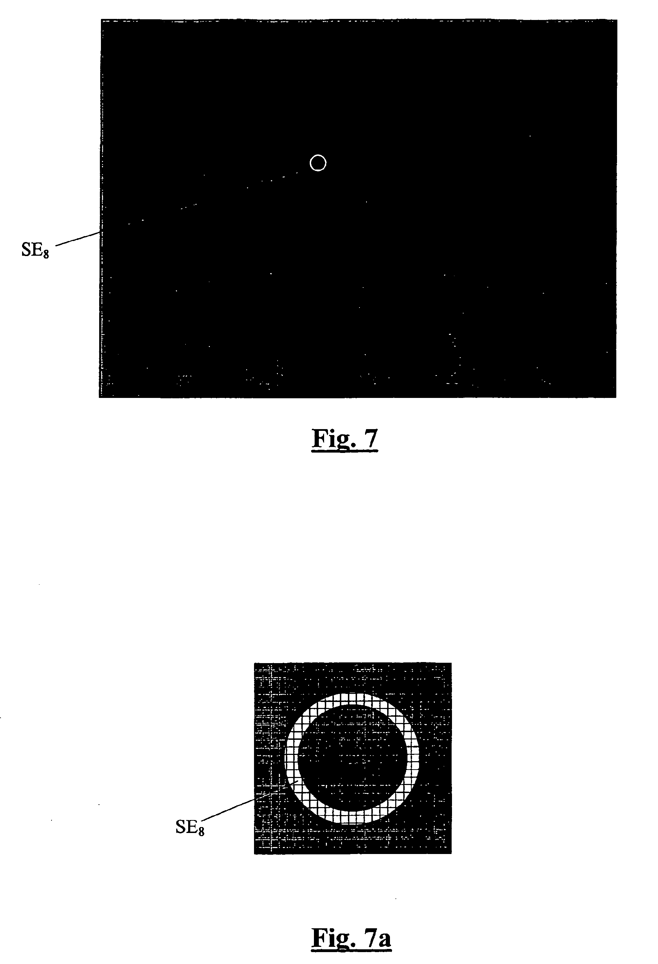

Die Fig. 7 zeigt ein Testbild mit einem einzigen Streulichtelement SE$_8$; die Fig. 7a zeigt das Streulichtelement SE$_8$ in vergrösserter Darstellung.

Gemessen wird, wie schon erwähnt, das Streulicht im Zentrum der Streulichtelemente. Das gemessene Streulicht wird jeweils auf 1 Pixel normalisiert (gemessene Remission dividiert durch die Ringfläche in Pixel-Einheiten). Der Quotient normalisiertes Streulicht durch Helligkeit der weissen Pixel ergibt den relativen Streulichteinfluss und damit diejenigen Koeffizienten der Streulicht-Matrix, die für alle diejenigen Bildpunktpaare gelten, die um den (mittleren) Ringradius des gemessenen Streulichtelements von einander entfernt sind.

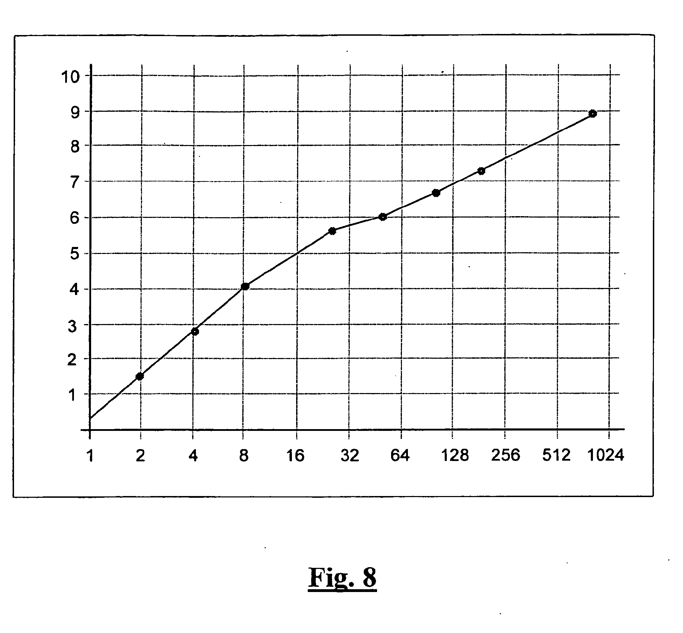

Anhand zahlreicher Testmessungen mit verschieden grossen Streulichtelementen konnte festgestellt werden, dass der Streulichteinfluss im doppelt logarithmischen Massstab zumindest abschnittsweise und auch insgesamt angenähert linear mit der Entfernung abnimmt. Die Fig. 8 zeigt einen beispielsweisen, anhand von 8 Streulichtelementen ausgemessenen Zusammenhang zwischen Streulicht und Bildpunktabstand grafisch in doppelt logarithmischer Skalierung. Die Abszisse gibt den Abstand in Pixel-Einheiten an, die Ordinate den negativen Logarithmus des relativen Streulichteinflusses bzw. des Streulichtkoeffizienten. Beispielsweise beträgt der Streulichtkoeffizient bei einem Abstand von rund 50 Pixeln $10^{-5.993}$. Bei einem Abstand von rund 2 Pixeln beträgt der Streulichtkoeffizient $10^{-1,564}$, ist also bereits um über 4 Zehnerpotenzen grösser!

Die anhand der 8 (oder mehr) Streulichtelemente gemessenen 8 (oder mehr) Streulichtkoeffizienten für durch die Ringradien definierte 8 (oder mehr) Pixelabstände können nun als Stützstellen für eine stückweise lineare Interpolation verwendet werden. Für jede Auflösungsstufe sind die Abstände der möglichen Bildpunkte-Paarungen bekannt (im hier gewählten Beispiel insgesamt 194464 Paarungen). Durch die erwähnte Interpolation können für jeden vokommenden Pixel-Abstand die zugehörigen Streulichtkoeffizienten mit ausreichender Genauigkeit errechnet werden. Für jede Auflösungsstufe ergibt sich so eine Streukoeffizienten-Matrix der Dimensionen 256*256, 144*144, 100*100, 64*64, 64*64 und 300*300, insgesamt also 194464 Streulichtkoeffizienten, von denen natürlich sehr viele gleich sind, weil viele Bildpunkt-Paarungen denselben Pixel-Abstand ergeben.

Die so berechneten sechs Streulichtkoeffizienten-Matrizen werden nun invertiert und ergeben damit die sechs Korrektur-Koeffizienten-Matrizen. Diese werden noch mit dem jeweils zugeordneten Kalibrierungsfaktor gemäss den vorstehenden Erläuterungen multipliziert und stehen dann für die Berechnung der Streulicht-Korrektur zur Verfügung. Unter der Voraussetzung, dass die Berechnungsroutinen in einer leistungsfähigen Programmiersprache, beispielsweise etwa C++, programmiert sind, lässt sich die Berechnung der Korrektur-Koeffizienten-Matrizen anhand der Messdaten der Testbilder auf jedem durchschnittlichen Büro-Rechner in wenigen Sekunden durchführen.

Kalibrierung der Streulichtkorrektur:

Die Streulicht-Korrektur kann noch optimiert werden, wenn gemäss einem weiteren wichtigen Aspekt der Erfindung eine Kalibrierung der Streulicht-Korrektur vorgenommen wird, deren Ziel es ist, den mittleren quadratischen Restfehler der Korrektur zu minimieren. Unter Restfehler wird die in einem Bildpunkt nach der Streulicht-Korrektur noch vorhandene Helligkeitsdifferenz (zum theoretisch erwarteten Wert) verstanden. Zum Beispiel sollte in einem schwarzen Bildbereich die gemessene Helligkeit (nach der Streulicht-Korrektur) eigentlich 0 sein. Bei ungenügend genauer Korrektur des Streulichts wird aber noch eine (sehr geringe) Resthelligkeit gemessen, welche den Restfehler für den betreffenden Bildbereich darstellt.

Die Kalibrierung der Streulicht-Korrektur besteht im wesentlichen darin, dass die Streulichtbeiträge der sechs Auswertungsbereiche mit (in der Regel verschiedenen) Gewichten bewertet und die gewichtete Summe (anstelle der normalen ungewichteten Summe) der einzelnen Streulichtbeiträge vom Remissionswert des Bildpunkts abgezogen wird. Dies kann durch die folgende Formel 2 dargestellt werden:

$$\Delta R = G_1 * \Delta R_{AB1} + G_2 * \Delta R_{AB2} + G_3 * \Delta R_{AB3} + G_4 * \Delta R_{AB4} + G_5 * \Delta R_{AB5} + G_6 * \Delta R_{AB6}$$

Darin sind $\Delta R$ die Gesamt-Streulicht-Korrektur eines Bildpunkts, $\Delta R_{AB1}$ .... $\Delta R_{AB6}$ die einzelnen Streulicht-Korrekturbeiträge der einzelnen Auswertungsbereiche $AB_1$ ... $AB_6$ und $G_1$ ... $G_6$ sechs zuvor einmalig bestimmte Gewichts- oder Kalibrierungsfaktoren.

In der Praxis werden nicht die Streulicht-Korrekturbeiträge gewichtet, sondern die für ihre Berechnung herangezogenen Korrektur-Koeffizienten (der jeweiligen Auflösungsstufe) mit dem der jeweiligen Auflösungsstufe zugeordneten Kalibrierungsfaktor multipliziert, beispielsweise also die 65536 Korrektur-Koeffizienten der Auflösungsstufe 1/1 mit dem Kalibrierungsfaktor $G_1$, die 20736 Koeffizienten der Auflösungsstufe 1/2 mit dem Kalibrierungsfaktor $G_2$, u.s.f. Wegen der Linearität der diversen Rechenoperationen liefert dies dasselbe Ergebnis, braucht aber nur einmal durchgeführt zu werden und ist deshalb insgesamt weniger aufwendig.

Die Bestimmung der Kalibrierungsfaktoren erfolgt durch Ausmessung und Auswertung von Testbildern mit geeigneten Bildmustern. Vorzugsweise sind die Testbilder mit speziellen Kalibrierungselementen versehen. Für jede Auflösung ist ein eigenes Testbild mit einem auf die Auflösung abgestimmten Kalibrierungselement vorgesehen. Obwohl die Kalibrierungselemente im Prinzip beliebig ausgebildet sein können, empfiehlt es sich, die Kalibrierungselemente den Auswertungsbereichen nachzubil den, um die Unabhängigkeit der Messungen zu gewährleisten. Die Figuren 6a und 6b zeigen, wie die Kalibrierungselemente vorzugsweise aussehen können. Dargestellt sind zwei Testbilder mit je einem Kalibrierungselement $KE_{16}$ bzw. $KE_8$ für die Auflösungsstufen 1/16 und 1/8, die übrigen Testbilder bzw. ihre Kalibrierungselemente sind analog ausgebildet.

Wie man erkennt, besteht jedes Kalibrierungselement nur aus einem weissen (eckigen) Ring. Die Aussenabmessungen des Rings entsprechen dem Auswertungsbereich $AB_n$ der Auflösungsstufe n, für welche das Kalibrierungselement vorgesehen ist (vgl. Fig. 5). Das (schwarze) Zentrum des Kalibrierungselements stimmt mit dem nächst inneren Auswertungsbereich bzw. dem Kernbereich überein. Das für die gröbste Auflösungsstufe (1/32) vorgesehene Kalibrierungselement ist insofern "entartet", als sich ausserhalb des weissen Rings keine schwarze Fläche anschliesst. Bezugspunkt für die Messungen bzw. Auswertungen ist jeweils der Kernbereich (8*8 Pixel in der vollen Auflösung) des (schwarzen) Zentrums des Kalibrierungselements. (Die schwarzen Bereiche der Testbilder sind aus zeichnerischen Gründen durch ein Graumuster dargestellt.)

Jedes Testbild wird nun ausgemessen, und im Kernbereich seines Kalibrierungselements werden die sechs Streulicht-Korrektur-Beiträge der einzelnen Auflösungsstufen bestimmt. Diese seien im folgenden als $S_{n,1}$, $S_{n,2}$ .... $S_{n,6}$ bezeichnet, wobei der Index n für das jeweilige Testbild bzw. die jeweilige Messung steht. Insgesamt sind für die Bestimmung der sechs Kalibrierungsfaktoren mindestens sechs (im mathematischen Sinn) unabhängige Messungen erforderlich. Ferner wird für jedes Testbild eine Dunkelmessung (weisse Ringe schwarz abgedeckt) durchgeführt, und es werden für dieselben Kernbereiche die entsprechenden Streulicht-Korrektur-Beiträge bestimmt. Diese seien im folgenden als $B_{n,1}$, $B_{n,2}$ .... $B_{n,6}$ bezeichnet, wobei der Index n wiederum für das jeweilige Testbild bzw. die jeweilige Messung steht. Die Dunkelmessung ist erforderlich, weil die schwarzen Bereiche der Testbilder aus physikalischen Gründen nicht ideal schwarz sind und ebenfalls Streulicht erzeugen. Anschliessend werden die Differenzen $D_{n,i}$ zwischen den Beiträgen $S_{n,i}$ der Hell-Messung und den Beiträgen $B_{n,i}$ der Dunkelmessung gebildet. Schliesslich wird noch für jede Messung n der Restfehler $F_n$ bestimmt (wie oben definiert).

Die 6*n Differenzen $D_{n,i}$ und die n Restfehler $F_n$ werden in das folgende Gleichungssystem mit den sechs Kalibrierungsfaktoren $G_i$ als Unbekannten eingesetzt:

$$- F_n = G_1*D_{n,1} + G_2*D_{n,2} + G_3*D_{n,3} + G_4*D_{n,4} + G_5*D_{n,5} + G_6*D_{n,6}$$

Dieses mindestens 6 Gleichungen umfassende Gleichungssystem wird nun nach den Unbekannten $G_1$ ... $G_6$ aufgelöst mit der Randbedingung, dass die Fehlerquadratsumme minimal wird (Ausgleichsrechnung). Wie man sieht, lässt sich das Gleichungssystem als Matrizen-Gleichung

$$(- F) = (D) * (G) \qquad \text{(Formel 2)}$$

schreiben, in der (- F) einen Fehlervektor mit den Komponenten - Fn, (G) einen Unbekanntenvektor mit den Komponenten $G_1$ ... $G_6$ und (D) eine Koeffizienten-Matrix mit den Elementen $D_{n,i}$ darstellen. Die Matrizen-Gleichung wird nach den bekannten Regeln der Ausgleichsrechnung wie folgt nach den Unbekannten gelöst:

$$(G) = [(D)^T * (D)]^{-1} * (D)^T * (- F) \qquad \text{(Formel 3)}$$

Darin bedeuten $(D)^T$ die transponierte Matrix zu (D) und $[(D)^T * (D)]^{-1}$ die inverse Matrix zum Produkt der beiden Matrizen $(D)^T$ und (D).

Mit den auf diese Weise ermittelten Kalibrierungsfaktoren $G_1$ ... $G_6$ werden die Korrektur-Koeffizienten der einzelnen Auflösungsstufen multipliziert (kalibriert). Diejenigen Koeffizienten, welche sich auf den jeweils zu korrigierenden Bildpunkt selbst beziehen (in Matrix-Darstellung die Diagonal-Elemente), werden natürlich nicht kalibriert.

Weissnormalisierung und Rand-Weissnormalisierung:

Auf die Reflex- und die Streulicht-Korrektur erfolgen die Weiss-Normalisierung und die Rand-Weissnormalisierung in der schon weiter vorne beschriebenen Weise. Danach erfolgt als letzte Korrekturmassnahme noch eine Spektral- bzw. Wellenlängen-Korrektur für die zur spektralen Aufspaltung eingesetzten Interferenzfilter.

Spektralkorrektur:

Die Spektralcharakteristik von Interferenzfiltern ist, wie schon weiter oben erwähnt, abhängig vom Eintrittswinkel der Lichtstrahlen. Dieser Winkel ist nicht konstant, sondern abhängig von der Position des gemessenen Bildpunkts auf dem Messobjekt. Er lässt sich jedoch aus der Position des jeweiligen Bildpunkts berechnen, und daraus kann wiederum die tatsächlich wirksame Filtercharakteristik für die betreffende Bildpunktposition bestimmt werden.

Wenn mit $(SP)_\gamma$ das unter einem gegebenen Einfallswinkel $\gamma$ unter Verwendung gegebener Interferenzfilter gemessene Spektrum bezeichnet ist, dann lässt sich daraus ein auf die nominellen Spektralbereiche (z.B. 400, 420, 440 ....680, 700 nm) korrigiertes Spektrum $(SP)_k$ durch eine Spline-Interpolation gemäss der Formel 4:

$$(SP)_k = (IM)_\gamma * (SP)_\gamma \qquad (Formel\ 4)$$

berechnen. Darin ist $(IM)_\gamma$ eine für den Einfallswinkel $\gamma$ gültige Interpolationsmatrix mit $n^2$ Elementen, wenn n die Anzahl der diskreten Spektralwerte (Wellenlängenbereiche) des Spektrums ist. Im vorliegenden Beispiel mit 16 diskreten Spektralkanälen besitzt die Matrix 16*16 = 256 Elemente. Die Elemente der Interpolationsmatrix (IM) $\gamma$ können in an sich bekannter Weise durch Testmessungen ermittelt werden.

Für die erfindungsgemässe Spektral-Korrektur werden nun für eine Anzahl, z.B. 50, diskreter Einfallswinkel $\gamma$ (z.B. zwischen 0° und 17°) die zugehörigen Interpolationsmatrizen $(IM)_\gamma$ bestimmt und abgespeichert. Jedem Bildpunktbereich von z.B. 8*8 Pixeln wird entsprechend seiner Lage auf dem Messobjekt einer dieser 50 diskreten Einfallswinkel $\gamma$ zugeordnet. Anschliessend wird das (zuvor natürlich gemäss den vorstehenden Ausführungen Kontrast-korrigierte) Spektrum $(SP)_\gamma$ jedes Bildpunkts anhand der zum zugeordneten Einfallswinkel $\gamma$ gehörenden Interpolationsmatrix (IM) $\gamma$ gemäss obenstehender Formel 4 auf die nominellen Spektralbereiche von z.B. 400, 420, 440 ....680, 700 nm umgerechnet.

Nach dieser letzten Korrekturmassnahme liegen für jeden Bildpunkt des Messobjekts korrigierte Bilddaten (Spektren) 72 vor, welche dann für die weitere Verwendung bzw. Auswertung zur Verfügung stehen. Die Präzision der auf diese Weise gewonnenen korrigierten Bilddaten ist mit derjenigen von mittels herkömmlicher Farbmessgeräte gemessenen Bilddaten vergleichbar.

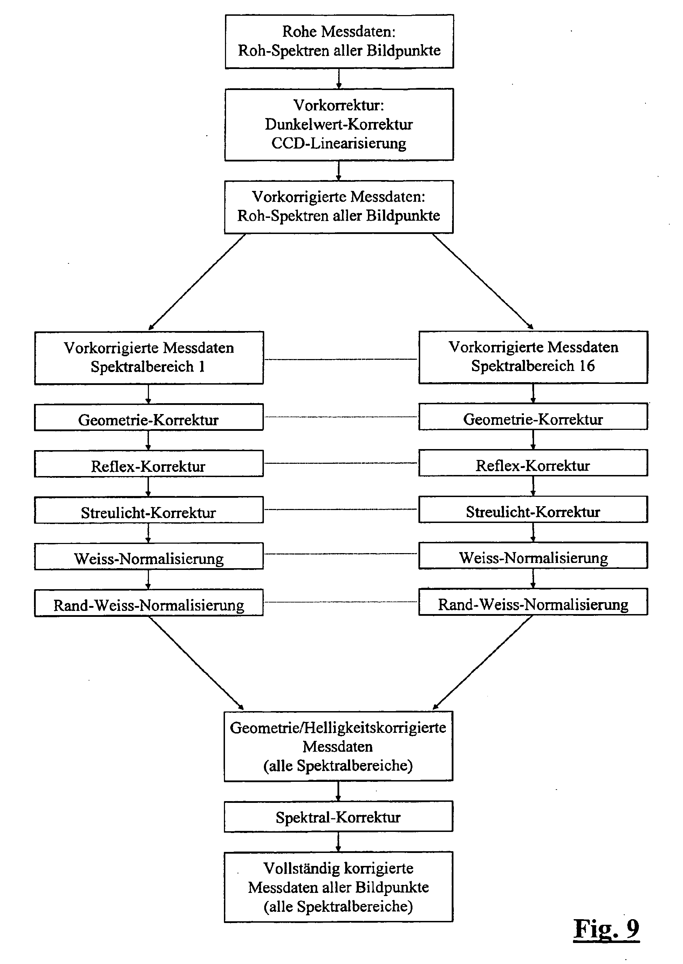

In der Fig. 9 sind die diversen Korrekturmassnahmen zusammenfassend nochmals übersichtlich dargestellt.

## Patentansprüche

1. Vorrichtung zur bildelementweisen fotoelektrischen Ausmessung eines flächigen Messobjekts, mit
   Abbildungsmitteln (3, 21) zur Abbildung des Messobjektes (M) auf eine zweidimensionale Anordnung (22) von Lichtwandlerelementen,
   mit im Abbildungsstrahlengang vorgesehenen Filtermitteln (66) zur wellenlängenselektiven Filterung des auf die Lichtwandlerelemente auftreffenden Messlichts,
   mit Signalaufbereitungsmitteln (23) zur Aufbereitung der von den Lichtwandlerelementen erzeugten elektrischen Signale und Umwandlung derselben in entsprechende digitale Rohmessdaten (71),
   mit Datenverarbeitungsmitteln (7) zur Verarbeitung der Rohmessdaten in die Farben der einzelnen Bildelemente des Messobjekts repräsentierende Bilddaten (72),
   mit Beleuchtungsmitteln (4, 41-43; 5, 51-53), welche das Messobjekt (M) mit mindestens einem parallelen Lichtbündel unter einem Einfallswinkel ($\alpha$) von 45°$\pm$5° beleuchten,
   mit einer telezentrischen Abbildungsoptik (3, 21), welche jeden Punkt des Messobjekts (M) unter einem Beobachtungswinkel von 0°$\pm$5° zur Normalen auf die Lichtwandlerelementanordnung (22) abbildet,
   mit einer Videokamera (2) mit einem zweidimensionalen Bildsensor (22) und einem Abbildungsobjektiv (21) mit Eintrittsblende (21a) sowie mit einer dem Abbildungsobjektiv vorgeschalteten Telelinse (3), deren Brennpunkt in oder nahe der Eintrittsblende (21a) angeordnet ist, wobei der Bildsensor (22) die zweidimensionale Lichtwandlerelementanordnung und das Abbildungsobjektiv (21) der Videokamera (2) zusammen mit der Telelinse (3) die telezentrische Abbildungsoptik bildet,
   wobei der Bildsensor (22) der Videokamera (2) mit mehreren zweidimensionalen Bildsensoren (221-236) und mit einer im Strahlengang des Abbildungsobjektivs (210) vorgesehenen farbselektiven Strahlenteileranordnung (261-291), welche jeweils einen Spektralbereich des Messlichts auf einen der Bildsensoren (221-236) lenken, **dadurch gekennzeichnet, dass** drei halbdurchlässige Spiegel (261-263) zur Aufspaltung des Messlichts in vier gleiche Kanäle ($K_1$-$K_4$) vorgesehen sind, und dass in jedem Kanal drei farbselektive Strahlenteiler (264-266, 267-269, 270-272, 273-275) vorgesehen sind, welche den betreffenden Kanal in vier Spektralbereiche aufteilen.

2. Vorrichtung nach Anspruch 1, **dadurch gekennzeichnet, dass** die Beleuchtungsmittel eine Beleuchtungslinse (42; 52) und eine im Brennpunkt derselben angeordnete Lichtquelle (4; 5) umfassen.

3. Vorrichtung nach Anspruch 2, **dadurch gekennzeichnet, dass** die Beleuchtungsmittel (4, 41-43; 5,51-53) Intensitätsausgleichsmittel (43; 53) umfassen, welche eine gleichmäßige Beleuchtungsstärke über die gesamte beleuchtete Fläche des Messobjekts (M) bewirken.

4. Vorrichtung nach Anspruch 3, **dadurch gekennzeichnet, dass** die Intensitätsausgleichmittel durch ein vorzugsweise farbneutrales Verlaufsfilter (43; 53) gebildet sind.

5. Vorrichtung nach einem der Ansprüche 2-4, **dadurch gekennzeichnet, dass** die Beleuchtungslinse (42; 52) als Fresnel-Linse ausgebildet ist.

6. Vorrichtung nach den Ansprüchen 4 und 5, **dadurch gekennzeichnet, dass** das Verlaufsfilter (43; 53) an oder auf der Fresnel-Linse (42; 52) angeordnet ist.

7. Vorrichtung nach einem der Ansprüche 2-6, **dadurch gekennzeichnet, dass** die Lichtquelle (4; 5) als Blitzlichtquelle ausgebildet ist.

8. Vorrichtung nach Anspruch 1, **dadurch gekennzeichnet, dass** die Telelinse (3) als Fresnel-Linse ausgebildet ist.

9. Vorrichtung nach Anspruch 1, **dadurch gekennzeichnet, dass** den farbselektiven Strahlenteilern (264-266, 267-269, 270-272, 273-275) Bandpassfilter (276-291) mit einer Bandbreite von je etwa 20 nm nachgeordnet sind, welche insgesamt im wesentlichen den Spektralbereich von 400 - 700 nm abdecken.

10. Vorrichtung nach einem der Ansprüche 1 oder 9, **dadurch gekennzeichnet, dass** die halbdurchlässigen Spiegel (261-263) und die farbselektiven Strahlenteiler (264-266, 267-269, 270-272, 273-275) sowie die Bildsensoren (221-236) und ggf. die Bandpassfilter (276-291) an den Begrenzungsflächen von aneinandergekitteten Glasprismen angeordnet sind.

**Claims**

1. An apparatus for the pixel-by-pixel photoelectric measurement of a planar object to be measured, comprising:

   imaging means (3, 21) for imaging the measured object (M) onto a two-dimensional array (22) of light converter elements,
   filter means (66) provided in the imaging optical path for the wavelength-selective filtering of the measuring light striking the light converter elements,
   signal conditioning means (23) for conditioning the electric signals generated by the light converter elements and the conversion of said signals into corresponding digital raw measured data (71),
   data processing means (7) for processing the raw measured data into image data (72) representing the colours of the individual pixels of the measured object,
   illumination means (4, 41-43; 5, 51-53), which illuminate the measured object (M) with at least one parallel pencil of rays at an angle of incidence ($\alpha$) of 45°$\pm$5°,
   telecentrical imaging optics (3, 21), which image each point of the measured object (M) onto the light converter element array (22) at a viewing angle of 0°$\pm$5° to the normal,
   a video camera (2) having a two-dimensional image sensor (22) and an imaging lens (21) with entry shutter (21a) and also having a telelens (3) provided in front of the imaging lens, the focal point of which lies in or close to the entry shutter (21a), wherein the image sensor (22) forms the two-dimensional light converter element array and the imaging lens (21) of the video camera (2) together with the telelens (3) forms the telecentrical imaging optics,
   wherein the image sensor (22) of the video camera (2) with several two-dimensional image sensors (221-236) and with a colour-selective beam splitter array (261-291) provided in the optical path of the imaging lens (210), which each direct a spectral range of the measuring light onto one of the image sensors (221-236),
   **characterised in that** three semi-transparent mirrors (261-263) are provided to split the measuring light into four equal channels ($K_1$-$K_4$),
   and **in that** in each channel three colour-selective beam splitters (264-266, 267-269, 270-272, 273-275) are provided, which divide the respective channel into four spectral regions.

2. An apparatus according to Claim 1,

characterised in that the illumination means comprise an illumination lens (42; 52) and a light source (4; 5) disposed in the focal point thereof.

3. An apparatus according to Claim 2,
   characterised in that the illumination means (4, 41-43; 5, 51-53) comprise intensity equalising means (43; 53) which produce uniform illumination over the entire illuminated area of the measured object (M).

4. An apparatus according to Claim 3,
   characterised in that the intensity equalising means are formed by a preferably colour-neutral blend filter (43; 53).

5. An apparatus according to one of Claims 2-4,
   characterised in that the illumination lens (42; 52) is constructed as a Fresnel lens.

6. An apparatus according to Claims 4 and 5,
   characterised in that the blend filter (43; 53) is disposed at or on the Fresnel lens (42; 52).

7. An apparatus according to one of Claims 2-6,
   characterised in that the light source (4; 5) is constructed as a flash light source.

8. An apparatus according to Claim 1,
   characterised in that the telelens (3) is constructed as a Fresnel lens.

9. An apparatus according to Claim 1,
   characterised in that bandpass filters (276-291), each having a band width of roughly 20 nm, which overall essentially cover the spectral range of 400 - 700 nm, are located after the colour-selective beam splitters (264-266, 267-269, 270-272, 273-275).

10. An apparatus according to one of Claims 1 or 9,
    characterised in that the semi-transparent mirrors (261-263) and the colour-selective beam splitters (264-266, 267-269, 270-272, 273-275) as well as the image sensors (221-236) and possibly the bandpass filters (276-291) are disposed at the boundary faces of connected glass prisms.

**Revendications**

1. Dispositif pour la mesure photoélectrique, élément d'image par élément d'image d'un objet plat à mesurer, avec des moyens de reproduction (3, 21) pour la reproduction de l'objet à mesurer (M) sur un agencement bidimensionnel (22) d'éléments convertisseurs de lumière,
   avec des moyens de filtrage (66) prévus dans la trajectoire du faisceau de reproduction, pour le filtrage sélectif par longueurs d'ondes de la lumière de mesure incidente sur les éléments convertisseurs de lumière,
   avec des moyens de traitement des signaux (23) pour le traitement des signaux électriques délivrés par les éléments convertisseurs de lumière et pour la transformation de ces derniers en données de mesure numériques brutes (71),
   avec des moyens de conversion des données (7) pour la conversion des données de mesure brutes en des données-image (72) représentant les couleurs des différents éléments d'image de l'objet à mesurer,
   avec des moyens d'éclairage (4, 41 à 43, 5, 51 à 53), qui éclairent l'objet à mesurer (M) avec au moins un faisceau lumineux parallèle sous un angle d'incidence ($\alpha$) de 45°$\pm$5°,
   avec une optique de reproduction télécentrique (3, 21), qui reproduit chaque point de l'objet à mesurer (M) sous un angle d'observation de 0°$\pm$5° par rapport à la normale sur l'agencement d'éléments convertisseurs de lumière (22),
   avec une caméra vidéo (2), avec un capteur d'images bidimensionnel (22) et avec un objectif de reproduction (21) avec un diaphragme d'entrée (21a), ainsi qu'avec une télélentille (3) placée en amont de l'objectif de reproduction dont le foyer est disposé dans le diaphragme d'entrée (21a) ou à proximité de ce dernier, le capteur d'images (22) formant l'agencement bidimensionnel d'éléments convertisseurs de lumière et l'objectif de reproduction (21) de la caméra vidéo (2) en liaison avec la télélentille (3) formant l'optique de reproduction télécentrique,
   le capteur d'images (22) de la caméra vidéo (2) étant muni de plusieurs capteurs d'images bidimensionnels (221 à 236) et d'un agencement de séparateurs de faisceau à sélection de couleurs (261 à 291) prévu dans la trajectoire du faisceau de l'objectif de reproduction (210) qui dirigent respectivement un domaine spectral de la lumière de mesure sur l'un des capteurs d'image (221 à 236),
   caractérisé en ce qu'on a prévu trois miroirs semi-transparents (261 à 263) pour la scission de la lumière de mesure en quatre canaux égaux ($K_1$ à $K_4$) et **en ce que** dans chaque canal, on a prévu trois séparateurs de faisceaux à sélection de couleurs (264 à 266, 267 à 269, 270 à 272, 273 à 275), qui divisent le canal concerné en quatre domaines spectraux.

2. Dispositif selon la revendication 1, **caractérisé en ce que** les moyens d'éclairage comprennent une lentille d'éclairage (42 ; 52) et une source lumineuse (4 ; 5) disposée dans le foyer de cette dernière.

3. Dispositif selon la revendication 2, **caractérisé en ce que** les moyens d'éclairage (4, 41 à 43 ; 5, 51 à 53) comprennent des moyens de compensation d'intensité (43; 53) qui assurent une intensité d'éclairage homogène sur l'ensemble de la surface éclairée de l'objet à mesurer (M).

4. Dispositif selon la revendication 3, **caractérisé en ce que** les moyens de compensation d'intensité sont formés par un filtre dégradé (43 ; 53), de préférence à couleurs neutres.

5. Dispositif selon l'une quelconque des revendications 2 à 4, **caractérisé en ce que** la lentille d'éclairage (42 ; 52) est conçue sous la forme d'une lentille de Fresnel.

6. Dispositif selon les revendications 4 et 5, **caractérisé en ce que** le filtre dégradé (43 ; 53) est disposé sur la lentille de Fresnel (42 ; 52).

7. Dispositif selon l'une quelconque des revendications 2 à 6, **caractérisé en ce que** la source lumineuse (4 ; 5) est conçue sous la forme d'une source de lumière flash.

8. Dispositif selon la revendication 1, **caractérisé en ce que** la télélentille (3) est conçue sous la forme d'une lentille de Fresnel.

9. Dispositif selon la revendication 1, **caractérisé en ce que** des filtres passe-bande (276 à 291) d'une largeur de bande d'environ 20 nm, recouvrant de façon globale sensiblement le domaine spectral de 400 à 700 nm, sont disposés en aval des séparateurs de faisceau à sélection de couleurs (264 à 266, 267 à 269, 270 à 272, 273 à 275).

10. Dispositif selon l'une quelconque des revendications 1 ou 9, **caractérisé en ce que** les miroirs semi-transparents (261 à 263) et les séparateurs de faisceau à sélection de couleurs (264 à 266, 267 à 269, 270 à 272, 273 à 275), ainsi que les capteurs d'image (221 à 236) et le cas échéant les filtres passe-bande (276 à 291) sont disposés sur les surfaces de délimitation de prismes de verre mastiqués les uns sur les autres.

**Fig. 1**

EP 1 213 569 B1

**Fig. 2**

**Fig. 2a**

340

341

343

342

**Fig. 3**

350

( - )

352

351

**Fig. 4**

AB₅

VIa

AB₆

AB₅

AB₄

AB₄

AB₃

AB₂

AB₃

AB₁

AB₂

KB

AB₁

**Fig. 5**

**Fig. 5a**

KE$_{16}$

**Fig. 6a**

KE$_8$

**Fig. 6b**

SE$_8$

**Fig. 7**

SE$_8$

**Fig. 7a**

**Fig. 8**

```
┌─────────────────────────────┐
│      Rohe Messdaten:        │
│ Roh-Spektren aller Bildpunkte│
└─────────────────────────────┘
              │
              ▼
┌─────────────────────────────┐
│        Vorkorrektur:        │
│    Dunkelwert-Korrektur     │
│     CCD-Linearisierung      │
└─────────────────────────────┘
              │
              ▼
┌─────────────────────────────┐
│   Vorkorrigierte Messdaten: │
│ Roh-Spektren aller Bildpunkte│
└─────────────────────────────┘
```

| Vorkorrigierte Messdaten Spektralbereich 1 | Vorkorrigierte Messdaten Spektralbereich 16 |
|---|---|
| Geometrie-Korrektur | Geometrie-Korrektur |
| Reflex-Korrektur | Reflex-Korrektur |
| Streulicht-Korrektur | Streulicht-Korrektur |
| Weiss-Normalisierung | Weiss-Normalisierung |
| Rand-Weiss-Normalisierung | Rand-Weiss-Normalisierung |

```
┌─────────────────────────────┐
│ Geometrie/Helligkeitskorrigierte│
│          Messdaten          │
│    (alle Spektralbereiche)  │
└─────────────────────────────┘
              │
              ▼
┌─────────────────────────────┐
│      Spektral-Korrektur     │
└─────────────────────────────┘
              │
              ▼
┌─────────────────────────────┐
│    Vollständig korrigierte  │
│  Messdaten aller Bildpunkte │
│    (alle Spektralbereiche)  │
└─────────────────────────────┘
```

**Fig. 9**